# EUROPÄISCHE PATENTSCHRIFT

(11) **EP 1 780 826 B1**
(45) Veröffentlichungstag und Bekanntmachung des Hinweises auf die Patenterteilung: **13.07.2011**
(21) Anmeldenummer: 05023350.1
(22) Anmeldetag: 26.10.2005
(51) Int. Cl.: H01M 10/52, H01M 2/12

(54) **Gas-Rekombinator**
Gas recombining device
Appareil pour recombiner les gas

(43) Veröffentlichungstag der Anmeldung: 02.05.2007
(73) Patentinhaber: Hoppecke Technologies GmbH & Co. KG, 08056 Zwickau (DE)
(72) Erfinder: Ruch, Jean, Dr., 59929 Brilon (DE); Pack, Hugo, 59929 Brilon-Bontkirchen (DE); Schmidt, Julia, 33154 Salzkotten (DE)
(74) Vertreter: Stenger, Watzke & Ring

(56) Entgegenhaltungen:
- US-A- 3 470 024
- US-A- 5 258 243
- US-A1- 2002 061 434

## Beschreibung

Die Erfindung betrifft einen Rekombinator zur katalytischen Rekombination von in Energiespeichern bzw. Energiewandlern auftretendem Wasserstoff.

Rekombinatoren der vorgenannten Art sind aus dem Stand der Technik bekannt und umfassen normalerweise ein Gehäuse und einen darin angeordneten Katalysator. Als Katalysatoren sind vor allem Platinmetalle bekannt, insbesondere Palladium, das in Form einer dünnen Schicht auf einen Trägerstab, der z. B. aus Kupfer, Tonerde oder dergleichen bestehen kann, aufgetragen ist. Der auf diese Weise ausgebildete Katalysatorstab ist in einer Röhre aus porösem Material eingesetzt, wie beispielsweise in ein gasdurchlässiges Keramikrohr, wobei der in der Röhre zwischen Katalysatorstab und Röhreninnenfläche verbleibende freie Ringraum mit einem Absorptionsmaterial gefüllt ist. Als Absorptionsmaterial kommen insbesondere Bleioxyde, Silberoxyde, Eisenoxyde, Kupferoxyde, Aluminiumoxyde, Manganoxide oder dergleichen in Betracht. Die den Katalysatorstab und das Absorptionsmaterial aufnehmende Röhre ist in aller Regel freistehend innerhalb eines gasdichten Behälters, vorzugsweise eines Kunststoffbehälters angeordnet, wobei der Behälter an den Stirnseiten verschlossen ist. Der Behälter verfügt seinerseits über Rohrstutzen zum Anschluß an einen Akkumulator für die Gaszufuhr einerseits und den Wasserablauf andererseits.

Die bei einem Betrieb eines Akkumulators, insbesondere während eines Ladevorganges entstehenden Gase Wasserstoff und Sauerstoff werden über den einen Rohrstutzen des Behälters in den Behälter geführt, passieren dort die poröse Röhre und das Absorptionsmaterial und werden anschließend am Katalysator zu Wasser rekombiniert. Die Rekombinationsreaktion ist exotherm, weshalb das am Katalysator rekombinierte Wasser zunächst in Form von Wasserdampf vorliegt. Der am Katalysator entstehende Wasserdampf schlägt sich dann an der Behälterinnenwandung nieder, kondensiert und fließt über den hierfür vorgesehenen Rohrstutzen zurück in den Akkumulator.

Der zuvor beschriebene Rekombinator ist dahingehend vorteilhaft, daß die bei einem Akkumulatorbetrieb frei werdenden Gase Wasserstoff und Sauerstoff durch den Rekombinator zu Wasser rekombiniert werden, wobei das Wasser anschließend über den Rohrstutzen zurück in den Akkumulator geführt wird. Es ist daher nicht erforderlich, destilliertes Wasser in den Elektrolyten des Akkumulators nachzufüllen. insofern erweist sich ein je nach seiner Größe mit einem oder mehreren Rekombinatoren versehener Akkumulator als wartungsfrei.

Obgleich sich Rekombinatoren der vorbeschriebenen Art in der Praxis bewährt haben, ist es stets wünschenswert, diese weiter zu verbessern.

Es ist daher eine Aufgabe der vorliegenden Erfindung, einen optimierten Rekombinator zur katalytischen Rekombination von in Energiespeichern bzw. Energiewandlern auftretendem Wasserstoff zu schaffen.

Diese Aufgabe wird gemäß der vorliegenden Erfindung durch einen Rekombinator nach Anspruch 1 gelöst. Die abhängigen Ansprüche beziehen sich auf individuelle Ausgestaltungen des erfindungsgemäßen Rekombinators.

Bei herkömmlichen Rekombinatoren kann es aufgrund der Kondensation des rekombinierten Wasserdampfes innerhalb des Gehäuses des Rekombinators zur Bildung eines Unterdruckes innerhalb des Gehäuses kommen, da das kondensierte Wasser ein weit geringeres Volumen als der rekombinierte Wasserdampf einnimmt. Dieser Unterdruck kann derart ansteigen, daß sich der Wirkungsgrad der Rekombinationseinrichtung verschlechtert. Ferner besteht die Gefahr, daß der Rekombinator samt Zellengehäuse bei zu hohem Unterdruck berstet. Um die Enststehung eines Unterdrucks innerhalb eines Gehäuses des Rekombinators und somit eine Verschlechterung des Wirkungsgrades zu reduzieren bzw. gezielt zu kontrollieren, umfaßt der erfindungsgemäße Rekombinator ein Unterdruckventil, das den Innenraum des gasdichten Gehäuses im geöffneten Zustand fluidtechnisch mit der Umgebung verbindet, so daß zwischen dem Gehäuseinnenraum und der Umgebung ein Druckausgleich stattfinden kann. Das Unterdruckventil öffnet dabei bei einem definierten Druck, der beispielsweise im Bereich von etwa 100 - 120 mbar unter dem Umgebungsdruck liegt.

Neben der Entstehung eines Unterdruckes in dem Gehäuseinnenraum ist bei herkömmlichen Rekombinatoren auch die Bildung eines Überdruckes möglich, wie beispielsweise unter Einwirkung erhöhter Temperaturen, durch Versagen des Rekombinators oder dergleichen. Ein solcher Überdruck kann ebenfalls bis zum Bersten des Gehäuses und der Rekombinationseinrichtung führen. Gemäß der vorliegenden Erfindung umfaßt der Rekombinator daher auch ein Überdruckventil, das den Innenraum des gasdichten Gehäuses mit der Umgebung verbindet. Fällt nunmehr der Rekombinator aus, ist zwar die Wartungsfreiheit des Akkumulators nicht mehr gegeben, wohl aber die Sicherheit vor einem Bersten des Gehäuses gewährleistet. Bei der Auslegung des Öffnungsdruckes des Überdruckventils ist zu berücksichtigen, daß die Verweildauer des Wasserstoff-Sauerstoff-Gemisches in dem Gehäuse des Rekombinators durch einen gewissen Überdruck verlängert und somit der Wirkungsgrad des Rekombinators verbessert werden kann. Der Öffnungsdruck des Überdruckventils sollte daher nicht zu gering gewählt werden. Bevorzugt ist ein Öffnungsdruck im Bereich von etwa 100 bis 120 mbar oberhalb des Umgebungsdruckes.

Das Überdruckventil und/oder das Unterdruckventil umfaßt/umfassen einen Zündschutz, der ein Entzünden des in dem Ventil, Rekombinator und Zellengehäuse vorhandenen Gases verhindert. Der Zündschutz ist bevorzugt in Form einer Fritte vorgesehen.

Das Überdruck- und das Unterdruckventil sind im Betriebszustand des Rekombinators vorteilhaft oben am gasdichten Gehäuses angeordnet. Auf diese Weise ist eine zuverlässige Arbeitsweise der Ventile gewährleistet.

Noch besser ist es, wenn das Überdruck- und das Unterdruckventil im Betriebszustand des Rekombinators oben und seitlich am gasdichten Gehäuse angeordnet sind, also die Ventilöffnungen zur Umgebung seitlich nach außen weisen. Bevorzugt steht zur Realisierung einer solchen Anordnung ein einen Hohlraum ausbildender Steg aufwärts von dem im Betriebszustand des Rekombinators oben positionierten Abschnitt des gasdichten Gehäuses vor, an dessen Seitenflächen das Überdruck- und das Unterdruckventil seitlich nach außen weisend angeordnet sind.

Zudem umfaßt das Überdruckventil und/oder Unterdruckventil bevorzugt eine Kondensatableitung, um zu verhindern, daß Kondensat in das entsprechende Ventil gelangt.

Schließlich weist der Rekombinator gemäß der vorliegenden Erfindung vorteilhaft ein kombiniertes Überdruck-/Unterdruckventil auf, um auf diese Weise die Konstruktion des Rekombinators zu vereinfachen.

Nachfolgend wird die vorliegende Erfindung anhand individueller beispielhafter Ausgestaltungen des Rekombinators unter Bezugnahme auf die beiliegende Zeichnung genauer beschrieben. Darin ist:
- Fig. 1: eine Seitenansicht einer ersten beispielhaften Ausführungsform eines erfindungsgemäßen Rekombinators;
- Fig. 2: eine Schnittansicht des in Fig. 1 gezeigten Rekombinators entlang der Schnittlinie II-II in Fig. 1;
- Fig. 3: eine Draufsicht des in den Fign. 1 und 2 gezeigten Rekombinators;
- Fig.4: eine Schnittansicht eines kombinierten Überdruck-/Unterdruckventils des in den Fign. 1 bis 3 gezeigten Rekombinators entlang der Schnittlinie IV-IV in Fig. 1;
- Fig. 5: eine Schnittansicht des in Fig. 4 gezeigten Überdruck-/Unterdruckventils entlang der Schnittlinie V-V in Fig. 4;
- Fig. 6: eine Teilseitenansicht einer zweiten beispielhaften Ausführungsform eines erfindungsgemäßen Rekombinators;
- Fig. 7: eine Draufsicht des in Fig. 6 gezeigten Rekombinators;
- Fig. 8: eine Teilseitenansicht einer dritten beispielhaften Ausführungsform eines erfindungsgemäßen Rekombinators;
- Fig. 9: eine Draufsicht des in Fig. 8 gezeigten Rekombinators;
- Fig. 10: eine teilweise geschnittene Teilseitenansicht einer vierten beispielhaften Ausführungsform eines erfindungsgemäßen Rekombinators;
- Fig. 11: eine Draufsicht des in Fig. 10 gezeigten Rekombinators;
- Fig. 12: eine Teilseitenansicht einer fünften beispielhaften Ausführungsform eines erfindungsgemäßen Rekombinators;
- Fig. 13: eine Draufsicht des in Fig. 12 gezeigten Rekombinators;
- Fig. 14: eine Teilseitenansicht einer sechsten beispielhaften Ausführungsform eines erfindungsgemäßen Rekombinators und
- Fig. 15: eine Draufsicht des in Fig. 14 gezeigten Rekombinators.

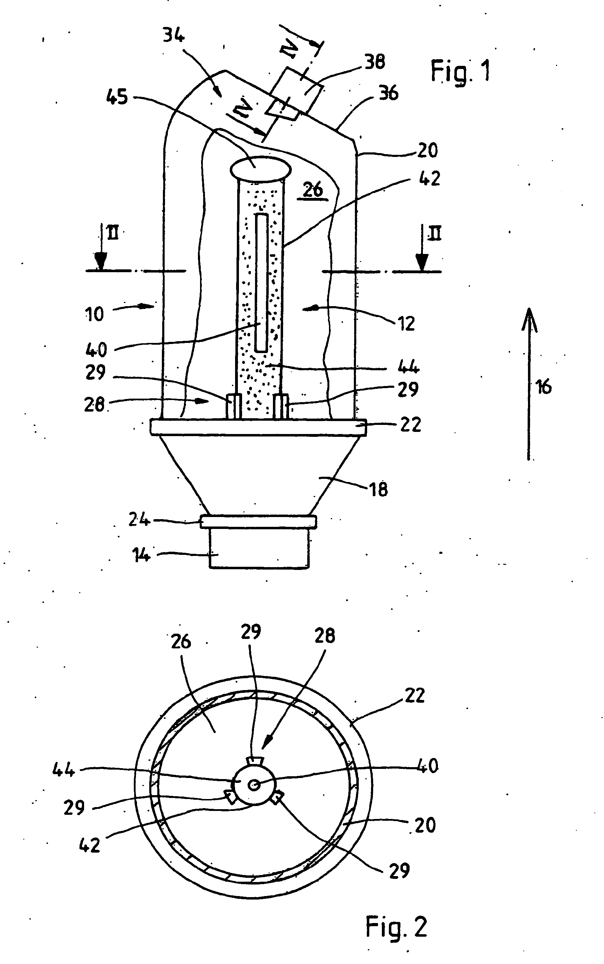

Fig. 1 zeigt in einer teilgeschnittenen Seitenansicht einen Rekombinator 10, der über eine Rekombinationseinrichtung 12 verfügt. Der Rekombinator 10 besteht in an sich bekannter Weise aus einem Anschlußstutzen 14, einem in Höhenrichtung 16 darüber angeordneten Stutzenelement 18, einem aus einem gasdichten Material bestehenden Gehäuse 20 sowie einem das Gehäuse 20 mit dem Stutzenelement 18 verbindenden Verschlußring 22. Am Anschlußstutzen 14 können in der Fig. 1 nicht dargestellte Nocken angeformt sein, um in einer Art einer Bajonetteverbindung den Rekombinator 10 an der Zellenöffnung eines in der Fig. 1 nicht gezeigten Akkumulators anzuordnen. Ein in Höhenrichtung 16 über dem Anschlußstutzen 14 angeordneter Aufsetzflansch 24 kann der Aufnahme eines nicht dargestellten Dichtringes dienen.

Innerhalb des vom Gehäuse 20 umschlossenen Innenraums 26 ist eine vom Stutzenelement 18 getragene Zentriereinrichtung 28 angeordnet, die mehrere Zentrierelemente 29 aufweist und der Aufnahme der Rekombinationseinrichtung 12 dient.

Die Zentriereinrichtung 28, das Stutzenelement 18, der Aufsetzflansch 24 und der Anschlußstutzen 14 sind vorzugsweise als einstückiges Bauteil ausgebildet und bestehen aus Kunststoff. Das Gehäuse 20, das vorzugsweise gleichfalls aus Kunststoff besteht, ist stutzenelementseitig offen ausgebildet und kann zwecks Anbindung an das Stutzenelement 18 stutzenelementseitig über entsprechende Verbindungs- und/oder Rastmittel verfügen. Für eine sichere Festlegung des Gehäuses 20 am Stutzenelement 18 dient zudem der Verschlußring 22.

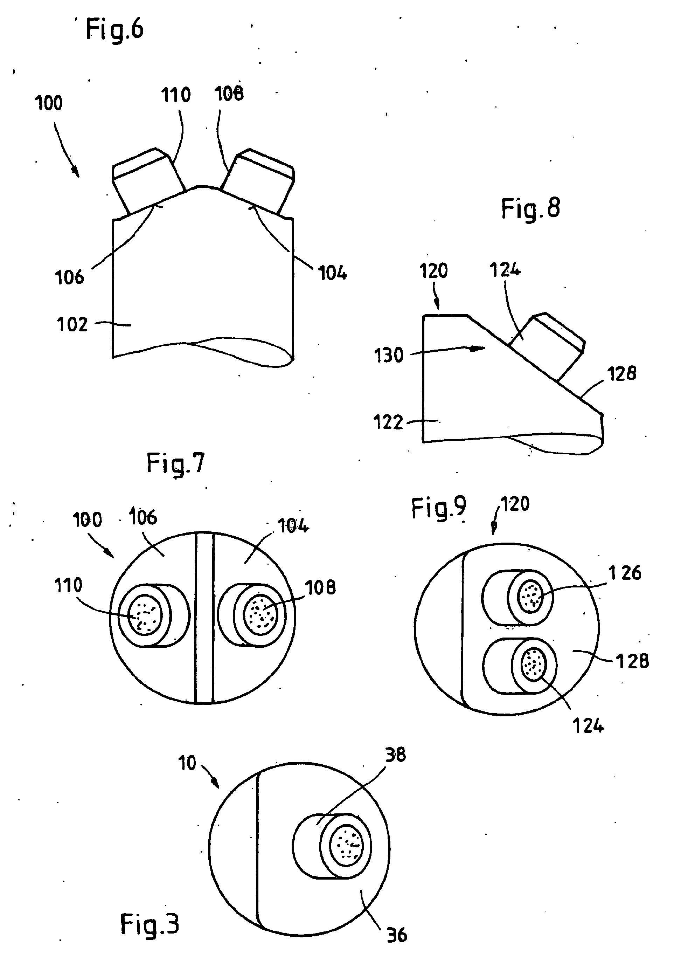

Das Gehäuse 20 des Rekombinators 10 weist einen im wesentlichen hohlen zylindrischen Aufbau mit ringförmigem Querschnitt auf und ist, in Höhenrichtung 16 betrachtet, an seinem oberen Ende kuppelartig durch einen im wesentlichen halbkugelförmigen Gehäuseabschnitt 34 gasdicht verschlossen. Der Gehäuseabschnitt 34 umfaßt eine Gehäusefläche 36, welche die Halbkugelform sekantenartig unterbricht. An dieser Gehäusefläche 36 ist ein kombiniertes Überdruck-/Unterdruckventil 38 vorgesehen, das den Volumeninnenraum 26 des Rekombinators 10 fluidtechnisch mit der Umgebung verbindet. Das kombinierte Überdruck-/Unterdruckventil 38 ist unter Bezugnahme auf die Fign. 3 bis 5 genauer beschrieben.

Die Rekombinationseinrichtung 12 ist in an sich bekannter Weise stabförmig ausgebildet und umfaßt einen zylindrischen Katalysatorstab 40, ein poröses Keramikrohr 42, das den Katalysatorstab 40 umgibt, und einen Absorber 44, der den Zwischenraum zwischen dem Keramikrohr 42 und dem Katalysatorstab 40 ausfüllt und den Katalysatorstab 40 vollständig umgibt, so daß ein direkter Kontakt zwischen dem Katalysatorstab 40 und dem porösen Keramikrohr 42 verhindert wird. Das Keramikrohr 42 ist an seinem oberen Ende verschlossen. Direkt am oberen Ende des Keramikrohres, oder frei darüber, ist ein Dachelement 45 angeordnet.

Fig. 2 ist eine Schnittansicht des Rekombinators 10 entlang der Schnittlinie II-II gemäß Fig. 1 Der in Fig. 2 gezeigte Rekombinator 10 umfaßt, von innen nach außen betrachtet, den Katalysatorstab 40, den Absorber 44, der den Katalysatorstab 40 ringförmig umgibt, eine poröse Ummantelung in Form eines Keramikrohrs 42, das den Absorber 44 umschließt und durch die Zentrierelemente 29 der Zentriereinrichtung 28 gehalten ist, den die Rekombinationseinrichtung 12 umgebenden Innenraum 26 des Gehäuses 20 und das Gehäuse 20. Der Katalysatorstab 40 kann in herkömmlicherweise ausgebildet sein und beispielsweise aus einem Tragelement gebildet sein, das außen umfangsseitig mit einem Katalysatormaterial beschichtet ist. Als Katalysatormaterial kann beispielsweise Palladium zum Einsatz kommen. Das Tragelement des Katalysators seinerseits kann aus Keramik, Tonerde oder dergleichen gebildet sein. Allgemein wird ein hochporöses, hitze- und korrosionsbeständiges Material bevorzugt. Der Absorber 44 kann beispielsweise Bleioxid, Silberoxid, Kupferoxid oder dergleichen umfassen. Die Zentrierelemente 29 der Zentriereinrichtung 28 umschließen das Keramikrohr 42 nur unvollständig, so daß sich keine Flüssigkeit am Fuß des Keramikrohrs 42 sammelt.

Gemäß der in Fig. 1 gezeigten Ausgestaltung des erfindungsgemäßen Rekombinators 10 strömen die Gase Wasserstoff und Sauerstoff über den Anschlußstutzen 14 und das Stutzenelement 18 in den vom Rekombinator 10 bereitgestellten Innenraum 26. Dabei passieren sie den Absorber 44, wobei sie von Fremdstoffen, insbesondere Hydriden, befreit, mithin gereinigt werden. Die gereinigten Gase können alsdann über die poröse Ummantelung 42 zu dem Katalysatorstab 40 gelangen, wo sie zu Wasserdampf rekombiniert werden. Der Wasserdampf kondensiert an den Wänden des Gehäuses 20 des Rekombinators 10. Die sich dabei bildenden Wassertropfen fließen abwärts und werden dann in die nicht dargestellte Batterie zurückgeführt.

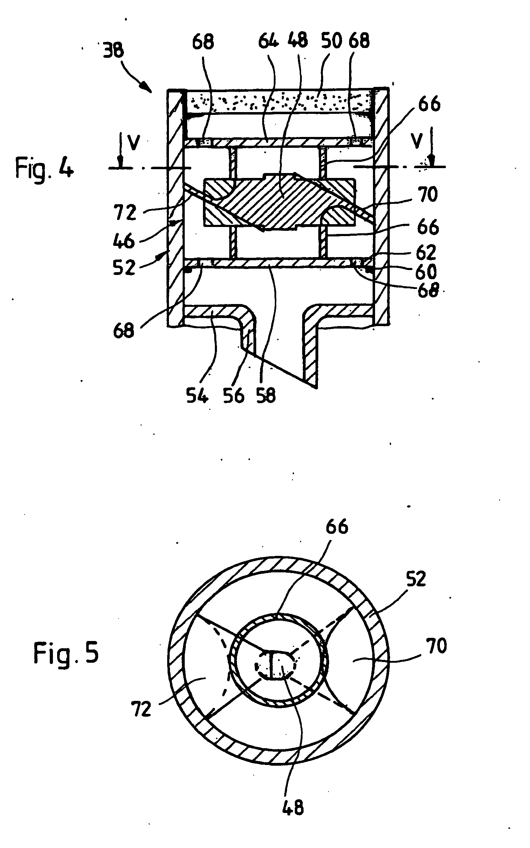

Unter Bezugnahme auf die Figuren 3 bis 5 wird nachfolgend das in Fig. 1 dargestellte kombinierte Überdruck-/Unterdruckventil 38 genauer beschrieben. Das dargestellte kombinierte Überdruck-/Unterdruckvenitl 38 umfaßt ein im wesentlichen rohrförmiges Ventilgehäuse 46 mit integriertem Ventilgummi 48 und Zündschutz 50. Das Ventilgehäuse 46 weist der Reihe nach einen ersten Ventilgehäuseabschnitt 52 mit einem ersten Durchmesser, einen sich an dem Ventilgehäuseabschnitt 52 anschließenden ringförmigen Absatz 54 und einen vom Innenumfang des ringförmigen Absatzes 54 nach außen vorstehenden zweiten Ventilgehäuseabschnitt 56. Der zweite Ventilgehäuseabschnitt 56 dient als Kondensatableitung, die verhindern soll, daß sich Kondensat in dem Ventilgehäuse 46 sammelt. Um eine möglichst gute Ableitung von Kondensat zu gewährleisten, ist der zweite Ventilgehäuseabschnitt 56 an seinem nach außen weisenden Ende abgeschrägt, wie es in Fig. 4 zu erkennen ist. Das Ventilgummi 48 ist mit Hilfe einer Positioniereinrichtung 58 in dem ersten Ventilgehäuseabschnitt 52 des Ventilgehäuses 46 positioniert, wobei sich die Positioniereinrichtung 58 auf eine an der Innenwandung des ersten Ventilgehäuseabschnittes 52 vorgesehene ringförmige Auflage 60 stützt. Die Positioniereinrichtung 58 umfaßt zwei parallel zueinander angeordnete Scheiben 62 und 64, die durch eine ringförmige Stütze 66 voneinander beabstandet sind, wobei das Ventilgummi 48 zwischen den beiden Scheiben 62 und 64 der Positioniereinrichtung 58 an der ringförmigen Stütze 66 gehalten ist. Die beiden Scheiben 62 und 64 weisen jeweils Durchgangslöcher 68 auf, die ein gasförmiges Fluid passieren kann. Das dem ersten Ventilgehäuseabschnitt 52 des Ventilgehäuses 46 gasdicht verschließende Ventilgummi 48 ist im wesentlichen scheibenförmig ausgebildet und umfaßt diametral einander gegenüberliegende lappenartige elastische Dichtungsklappen 70 und 72, deren freie Enden dichtend an der Innenwandung des ersten Ventilgehäuseabschnittes 52 anliegen.

Wie Fig. 4 erkennen läßt, erstrecken sich die Dichtungsklappen 70 und 72 dabei in entgegengesetzte Richtungen, d. h. die Dichtungsklappe 70 erstreckt sich schräg abwärts und die Dichtungsklappe 72 schräg aufwärts. Die Elastizität des Material des Ventilgummis 48 und die Neigung, in der sich die Dichtungsklappen 70 und 72 aufwärts bzw. abwärts erstrecken, sind derart gewählt, daß sich die Dichtungsklappe 70 bei einem Unterdruck von ca. 110 mbar und die Dichtungsklappe 72 bei einem Überdruck von ca. 110 mbar öffnen. Die Dichtungsklappe 70 bildet also das Unterdruckventil und die Dichtungsklappe 72 das Überdruckventil des kombinierten Überdruck-/Unterdruckventils 38.

In die Öffnung des freien Endes des ersten Ventilgehäuseabschnittes 52 des Ventilgehäuses 46 ist der Zündschutz 50 eingesetzt und beispielsweise mittels Ultraschall-Verschweißung befestigt.

In den Figuren 6 und 7 ist eine zweite beispielhafte Ausführungsform eines erfindungsgemäßen Rekombinators 100 dargestellt, wobei Fig. 6 eine Teilseitenansicht und Fig. 7 eine Draufsicht des Rekombinators 100 ist. Der Rekombinator 100 entspricht im wesentlichen dem in den Figuren 1 bis 5 dargestellten Rekombinator 10. Anders als der Rekombinator 10 ist das Gehäuse 102 des Rekombinators 100 an seiner Oberseite jedoch durch zwei schräg aufwärts aufeinander zulaufende Gehäuseflächen 104 und 106 verschlossen. Ferner sind anstelle des kombinierten Überdruck-/Unterdrucksventil 38 ein separates Überdruckventil 108 und ein separates Unterdruckventil 110 an den Gehäuseflächen 104 und 106 angeordnet, die fluidtechnisch mit dem Innenraum des Rekombinators verbunden sind.

Die Figuren 8 und 9 zeigen eine dritte beispielhafte Ausführungsform eines erfindungsgemäßen Rekombinators 120, der ebenfalls ein separates Überdruckventil 124 und ein separates Unterdruckventil 126 aufweist, die an einer gemeinsamen schrägen Gehäusefläche 128 eines das obere Ende des Gehäuses 122 abschließenden Gehäuseabschnittes 130 nebeneinander angeordnet sind.

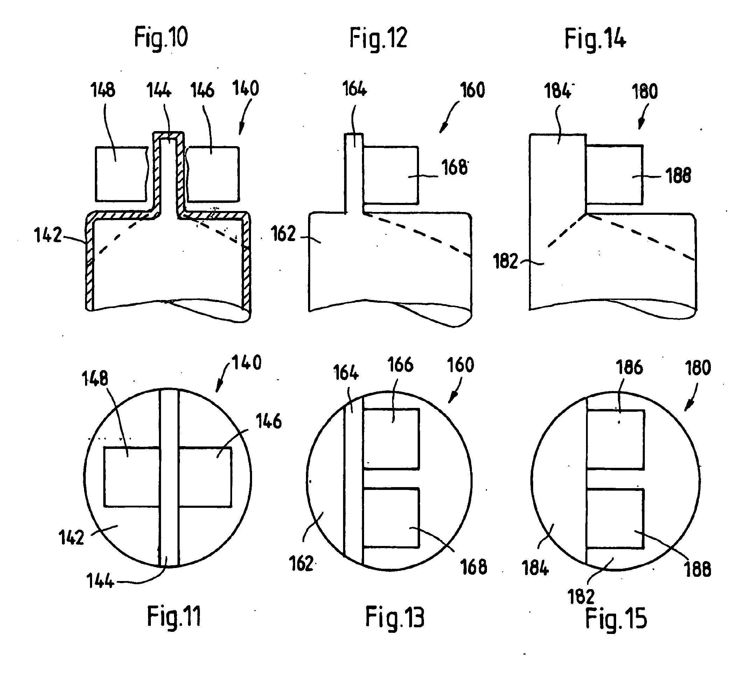

Die Figuren 10 und 11 zeigen eine vorteilhafte Ausgestaltungsform eines erfindungsgemäßen Rekombinators 140, wobei Fig. 10 eine teilweise geschnittene Teilseitenansicht und Figur 11 eine Draufsicht des Rekombinators 140 ist. Der Rekombinator 140 umfaßt ein Gehäuse 142, von dessen Oberseite sich ein hohler stegförmiger Gehäuseabschnitt 144 erstreckt. An diesen stegförmigen Gehäuseabschnitt ist auf einer Seite ein Überdruckventil 146 und auf der anderen Seite ein Unterdruckventil 148 angeordnet, wobei die Ventile 146 und 148 fluidtechnisch mit dem Innenraum des Gehäuses 142 des Rekombinators 140 verbunden sind.

Die Figuren 12 und 13 zeigen eine fünfte beispielhafte Ausführungsform eines erfindungsgemäßen Rekombinators 160, wobei Figur 12 eine Teilseitenansicht und Figur 13 eine Draufsicht des Rekombinators 160 ist. Der Rekombinator 160 umfaßt ein Gehäuse 162, an dessen Oberseite sich ein hohler stegförmiger Gehäuseabschnitt 164 aufwärts erstreckt. An einer Seite des stegförmigen Gehäuseabschnittes 164 ist sowohl ein Überdruckventil 166 als auch ein Unterdruckventil 168 angeordnet und fluidtechnisch mit dem Innenraum des Gehäuses 162 des Rekombinators 160 verbunden.

Die Figuren 14 und 15 zeigen schließlich eine sechste beispielhafte Ausführungsform eines erfindungsgemäßen Rekombinators 180, wobei in Figur 14 eine Teilseitenansicht und Figur 15 eine Draufsicht des Rekombinators 180 darstellt. Der Rekombinator 180 umfaßt ein Gehäuse 182, an dessen Oberseite sich seitlich ein hohler stegförmiger Gehäuseabschnitt 184 aufwärts erstreckt. An einer Seite des stegförmigen Gehäuseabschnittes 184 sind nebeneinander sowohl ein Überdruckventil 186 als auch ein Unterdruckventil 188 angeordnet und fluidtechnisch mit dem Innenraum des Gehäuses 82 des Rekombinators 180 verbunden.

### Bezugszeichenliste:

- 10: Rekombinator
- 12: Rekombinationseinrichtung
- 14: Anschlußstutzen
- 16: Höhenrichtung
- 18: Stutzenelement
- 20: Gehäuse
- 22: Verschlußring
- 24: Aufsetzflansch
- 26: Volumeninnenraum
- 28: Zentriereinrichtung
- 29: Zentrierelemente
- 34: Gehäuseabschnitt
- 36: Gehäusefläche
- 38: kombiniertes Überdruck-/Unterdruckventil
- 40: Katalsysatorstab
- 42: Keramikrohr
- 44: Absorber
- 45: Abschlußdachelement
- 46: Ventilgehäuse
- 48: Ventilgummi
- 50: Zündschutz
- 52: erster Ventilgehäuseabschnitt
- 54: Absatz
- 56: zweiter Ventilgehäuseabschnitt
- 58: Positioniereinrichtung
- 60: ringförmige Auflage
- 62: Scheibe
- 64: Scheibe
- 66: ringförmige Stütze
- 68: Durchgangslöcher
- 70: Dichtungsklappe
- 72: Dichtungsklappe

- 100: Rekombinator
- 102: Gehäuse
- 104: Gehäusefläche
- 106: Gehäusefläche
- 108: Überdruckventil
- 110: Unterdruckventil

- 120: Rekombinator
- 122: Gehäuse
- 124: Überdruckventil
- 126: Unterdruckventil
- 128: Gehäusefläche
- 130: Gehäuseabschnitt

- 140: Rekombinator
- 142: Gehäuse
- 144: stegförmiger Gehäuseabschnitt
- 146: Überdruckventil
- 148: Unterdruckventil

- 160: Rekombinator
- 162: Gehäuse
- 164: stegförmiger Gehäuseabschnitt
- 166: Überdruckventil
- 168: Unterdruckventil

- 180: Rekombinator
- 182: Gehäuse
- 184: stegförmiger Gehäuseabschnitt
- 186: Überdruckventil
- 188: Unterdruckventil

## Patentansprüche

1. Rekombinator (10; 100; 120; 140; 160, 180) zu**r** katalytischen Rekombination von in Energiespeichern bzw. Energiewandlern auftretendem Wasserstoff, umfassend ein gasdichtes Gehäuse (20; 102; 122; 142; 162; 182) und einen darin angeordneten Katalysator,
**dadurch gekennzeichnet, daß**
der Rekombinator (10; 100; 120; 140; 160,180) ein Unterdruckventil (38; 110; 126; 148; 168; 188), das den Innenraum (26) des gasdichten Gehäuses (20; 102; 122; 142; 162; 182) fluidtechnisch mit der Umgebung verbindet, sowie ein Überdruckventil (38; 108; 124; 146; 166, 186) umfaßt, das den Innenraum (26) des gasdichten Gehäuses (20; 102; 122; 142; 162; 182) mit der Umgebung verbindet, wobei das Überdruckventil (38; 108; 124; 146; 166, 186) und/oder das Unterdruckventil (38; 110; 126; 148; 168, 188) nur über einen Zündschutz (50) fluidtechnisch mit der Umgebung verbunden ist.

2. Rekombinator (10; 100; 120; 140; 160, 180) nach Anspruch 1, wobei das 1 Überdruckventil (38; 108; 124; 146; 166, 186) und das Unterdruckventil (38; 110; 126; 148; 168, 188) im Betriebszustand des Rekombinators (10; 100; 120; 140; 160, 180) oben am gasdichten Gehäuse (20; 102; 122; 142; 162; 182) angeordnet sind.

3. Rekombinator (140; 160, 180) nach Anspruch 1, wobei das Überdruckventil (146; 166; 186) und das Unterdruckventil (148; 168; 188) im Betriebszustand des Rekombinators (140; 160; 180) oben und seitlich am gasdichten Gehäuse (142; 162; 182) angeordnet sind.

4. Rekombinator (140; 160, 180) nach Anspruch 3, wobei sich von einem im Betriebszustand des Rekombinators (140; 160; 180) oben positionierten Abschnitt des gasdichten Gehäuses (142; 162; 182) ein einen Hohlraum ausbildender stegförmiger Gehäuseabschnitt (144; 164; 184) aufwärts erstreckt, an dem das Überdruckventil (146; 166; 186) und das Unterdruckventil (148; 168; 188) angeordnet sind.

5. Rekombinator (10;100; 120; 140; 160; 180) nach einem der vorhergehenden Ansprüche, wobei der Zündschutz (50) in Form einer Fritte vorgesehen ist.

6. Rekombinator (10; 100; 120; 140; 160; 180) nach einem der vorhergehenden Ansprüche, wobei das Überdruckventil (38; 108; 124; 146; 166, 186) und/oder Unterdruckventil (38;110; 126; 148; 168; 188) eine Kondensatableitung umfaßt.

7. Rekombinator (10) nach einem der vorhergehenden Ansprüche, wobei ein kombiniertes Überdruck-/Unterdruckventil (38) vorgesehen ist.

## Claims

1. Recombining device (10; 100; 120; 140; 160, 180) for the catalytic recombination of hydrogen occurring in energy storages or energy converters, said recombining device comprising a gas-tight housing (20; 102; 122; 142; 162; 182) and a catalyst disposed therein,
**characterized in**
**that** the recombining device (10; 100; 120; 140; 160, 180) comprises a negative pressure valve (38; 110; 126; 148; 168; 188) fluidically connecting the interior (26) of the gas-tight housing (20; 102; 122; 142; 162; 182) with the environment, and a pressure relief valve (38; 108; 124; 146; 166, 186) connecting the interior (26) of the gas-tight housing (20; 102; 122; 142; 162; 182) with the environment, said pressure relief valve (38; 108; 124; 146; 166, 186) and/or said negative pressure valve (38; 110; 126; 148; 168; 188) being fluidically connected with the environment only via an ignition protection (50).

2. Recombining device (10; 100; 120; 140; 160, 180) according to claim 1, wherein in the operative condition of the recombining device (10; 100; 120; 140; 160, 180) the pressure relief valve (38; 108; 124; 146; 166, 186) and the negative pressure valve (38; 110; 126; 148; 168; 188) are arranged in the top of the gas-tight housing (20; 102; 122; 142; 162; 182).

3. Recombining device (140; 160, 180) according to claim 1, wherein in the operative condition of the recombining device (140; 160, 180) the pressure relief valve (146; 166, 186) and the negative pressure valve (148; 168; 188) are arranged in the top and laterally of the gas-tight housing (142; 162; 182).

4. Recombining device (140; 160, 180) according to claim 3, wherein a web-like housing part (144; 164; 184) defining a hollow space extends upwardly from a part of the gas-tight housing (142; 162; 182) which in an operative condition of the recombining device is positioned in the top, with the pressure relief valve (146; 166; 186) and the negative pressure valve (148; 168; 188) being arranged on said web-like housing part.

5. Recombining device (10; 100; 120; 140; 160, 180) according to one of the preceding claims, wherein the ignition protection (50) is provided in the form of a frit.

6. Recombining device (10; 100; 120; 140; 160, 180) according to one of the preceding claims, wherein the pressure relief valve (38; 108; 124; 146; 166, 186) and/or the negative pressure valve (38; 110; 126; 148; 168; 188) comprise a condensate discharge means.

7. Recombining device (10; 100; 120; 140; 160, 180) according to one of the preceding claims, wherein a combined pressure relief/negative pressure valve (38) is provided.

## Revendications

1. Appareil pour recombiner les gaz (10 ; 100 ; 120 ; 140 ; 160, 180) pour la recombinaison catalytique d'hydrogène intervenant dans les réservoirs d'énergie ou les convertisseurs d'énergie comprenant un bâti étanche au gaz (20 ; 102 ; 122 ; 142 ; 162 ; 182) et un catalyseur qui y est placé,
**caractérisé en ce que**
l'appareil pour recombiner les gaz (10 ; 100 ; 120 ; 140 ; 160, 180) comprend une soupape de dépression (38 ; 110 ; 126 ; 148 ; 168 ; 188) qui relie l'espace intérieur (26) du bâti étanche au gaz (20 ; 102 ; 122 ; 142 ; 162 ; 182) à l'environnement de manière fluidique ainsi qu'une soupape de surpression (38 ; 108 ; 124 ; 146 ; 166, 186) qui relie l'espace intérieur (26) du bâti étanche au gaz (20 ; 102 ; 122 ; 142 ; 162 ; 182) à l'environnement, la soupape de surpression (38 ; 108 ; 124 ; 146 ; 166, 186) et/ou de dépression (38 ; 110 ; 126 ; 148 ; 168 ; 188) n'étant reliées à l'environnement de manière fluidique que par une protection d'allumage (50).

2. Appareil pour recombiner les gaz (10 ; 100 ; 120 ; 140 ; 160, 180) selon la revendication 1, la soupape de surpression (38 ; 108 ; 124 ; 146 ; 166, 186) et la soupape de dépression (38 ; 110 ; 126 ; 148 ; 168 ; 188) étant placées, lorsque l'appareil pour recombiner les gaz (10 ; 100 ; 120 ; 140 ; 160, 180) est en état de fonctionnement, en haut sur le bâti étanche au gaz (20 ; 102 ; 122 ; 142 ; 162 ; 182).

3. Appareil pour recombiner les gaz (140 ; 160, 180) selon la revendication 1, la soupape de surpression (146 ; 166, 186) et la soupape de dépression (148 ; 168 ; 188) étant placées, lorsque l'appareil pour recombiner les gaz (140 ; 160, 180) est en état de fonctionnement, en haut et sur le côté sur le bâti étanche au gaz (142 ; 162 ; 182).

4. Appareil pour recombiner les gaz (140 ; 160, 180) selon la revendication 3, une section de bâti (144 ; 163 ; 184) en forme de barrette qui forme un espace creux s'étendant vers le haut à partir d'une section du bâti étanche au gaz (142 ; 162 ; 182) qui est positionnée en haut lorsque l'appareil pour recombiner les gaz (140 ; 160, 180) est en état de fonctionnement, section de bâti sur laquelle la soupape de surpression (146 ; 166, 186) et la soupape de dépression (148 ; 168 ; 188) sont placées.

5. Appareil pour recombiner les gaz (10 ; 100 ; 120 ; 140 ; 160, 180) selon l'une des revendications précédentes, la protection d'allumage (50) étant prévue en forme de fritte.

6. Appareil pour recombiner les gaz (10 ; 100 ; 120 ; 140 ; 160, 180) selon l'une des revendications précédentes, la soupape de surpression (38 ; 108 ; 124 ; 146 ; 166, 186) et/ou la soupape de dépression (38 ; 110 ; 126 ; 148 ; 168 ; 188) comprenant une décharge de produit de condensation.

7. Appareil pour recombiner les gaz (10) selon l'une des revendications précédentes, une soupape de surpression/dépression combinée (38) étant prévue.
